# EUROPEAN PATENT SPECIFICATION

(11) **EP 1 129 606 B1**
(45) Date of publication and mention of the grant of the patent: **29.12.2004**
(21) Application number: 01200461.0
(22) Date of filing: 09.02.2001
(51) Int. Cl.: A01B 63/112, G01L 5/13

(54) **Device and method for controlling the attitude of an implement drawn by an agricultural tractor**
Verfahren und Vorrichtung zur Neigungssteuerung eines schleppergezogenen Geräts
Procédé et dispositif pour contrôler l'inclinaison d'un outil tracté par un tracteur agricole

(30) Priority: 29.02.2000 IT BO200101
(43) Date of publication of application: 05.09.2001
(73) Proprietor: CNH Italia S.p.A., 41100 Modena (IT)
(72) Inventor: Luca, Nicolini, 41100 Modena (IT); Angelo, Gregorio, 41100 Cittanova (Modena) (IT); Sereni, Eugenio, 41030 Albareto (Modena) (IT)
(74) Representative: Vandenbroucke, Alberic

(56) References cited:
- EP-A- 0 693 250
- DE-A- 3 534 711
- GB-A- 909 087
- US-A- 4 499 775
- US-A- 4 576 053

## Description

The present invention relates to a device and method for controlling the attitude of an implement drawn by an agricultural vehicle.

Many agricultural vehicles, such as tractors, are equipped with devices for automatically controlling the attitude and position of the implement by detecting the forces exerted on the lift attachment arms, so as to optimise machine performance by lifting or lowering the implement as a function of its working resistance.

In particular, when applied to a hydraulically operated three point hitch arrangement, devices are known in which the action of the ground on the implement is detected by two sensors (e.g. see DE-A-3534711) which are operatively connected to two pivot pins about which the lower lift arms pivot with respect to the tractor frame. The implement, which is connected to the lower lift arms, is lifted by means of two hydraulically powered top arms which pivot with respect to the frame and which in turn are connected mechanically to the lower arms. A so-called top link further provides a connection between the top of the implement and the tractor frame. In other words, the two lower arms and the top link connect the implement at three points to the tractor frame and as such together define the three point hitch.

The sensors on the lower arm pivot pins are operable to measure deflection of the pins under the load exerted by the implement.

Such a device is described, for example, in EP-A-0.713.637 in which the agricultural tractor described employs two Hall-effect deflection sensors located at the attachment points of the lift arms to the frame. The neutral plane of the sensors remains substantially perpendicular at all times to the ground being operated, so that EP-A-0.713.637 and similar prior art arrangements do not allow for the deflection sensor to be rotated a given angle with respect to the ground. For this reason, since the deflection sensor detects stress substantially perpendicular to the neutral plane, the EP-A-0.713.637 arrangement only provides for measuring the pure horizontal pulling force of the implement, which results in poor measurement and control when the pulling force is affected by the overall configuration of the implement and the way it is attached to the tractor as opposed to only the working depth of the implement. EP-A-0.713.637 discloses a device according to the preamble of claim 1.

The following is a more detailed description of a typical application to illustrate the problem the invention proposes to solve.

With an implement such as a ripper, which produces drainage ditches of more or less constant depth, the pulling force is mainly exerted by the ends of the implement. As such, apart from the pulling force, there is also a considerable influence of vertical loads on the implement, which varies with the working depth chosen. On encountering ground areas of different consistency, pull-controlled lifting is only effective in the presence of considerable undesired variations in working depth. Lifting also produces an increase in vertical load due to the geometry of the implement, which results in increased lift pressure in the hydraulic circuit and in a chain reaction which may even result in the implement being withdrawn completely from the ground. At this point, the system commands a rapid lowering, thus resulting in jerky operation with the implement being continuously withdrawn and lowered rapidly.

By way of a solution to the problem, an inventive device is proposed for controlling the attitude of an implement drawn by an agricultural machine, which enables the operator, as explained in detail later on, to selectively adjust the tilt of the deflection sensors with respect to the ground plane. In other words, the neutral plane of the sensors may be tilted with respect to the substantially horizontal ground plane for different working conditions of the implement and different ground consistencies and properties.

The deflection sensor therefore detects not only the pulling force of the implement but also a sustaining and lifting force component indicating, instant by instant, the way in which the pulling force is actually affected by the lifting force. In practice, the lifting force produces a component on the read axis of the sensor but oppositely oriented with respect to the pulling force projection, so that the electronic central control unit receives a lower reading which slows down, and eventually arrests, the lift operation in proportion to the ground penetration force of the implement. The lift operation can therefore be arrested long before the implement is withdrawn completely from the ground, thereby eliminating any jerky behaviour of the implement and enabling smooth operation more coherent with conditions external to the automatic implement lift system.

According to a first aspect of the present invention, a device as claimed is provided for controlling the attitude of an agricultural implement drawn by an agricultural vehicle.

According to a second aspect of the present invention, a method as claimed is provided of controlling the attitude of an agricultural implement drawn by an agricultural vehicle.

A non-limiting embodiment of the present invention will now be described by way of example with reference to the accompanying drawings, in which:
Figure 1 shows the rear of an agricultural tractor equipped with a device in accordance with the invention;
Figure 2 shows a front view of details of the Figure 1 device;
Figure 3 shows a horizontal section along line III-III of the Figure 2 details;
Figure 4 shows a dynamic diagram relative to a deflection sensor in the prior-art position with respect to the frame; and
Figure 5 shows a dynamic diagram relative to a sensor positioned with respect to the frame according to the present invention.

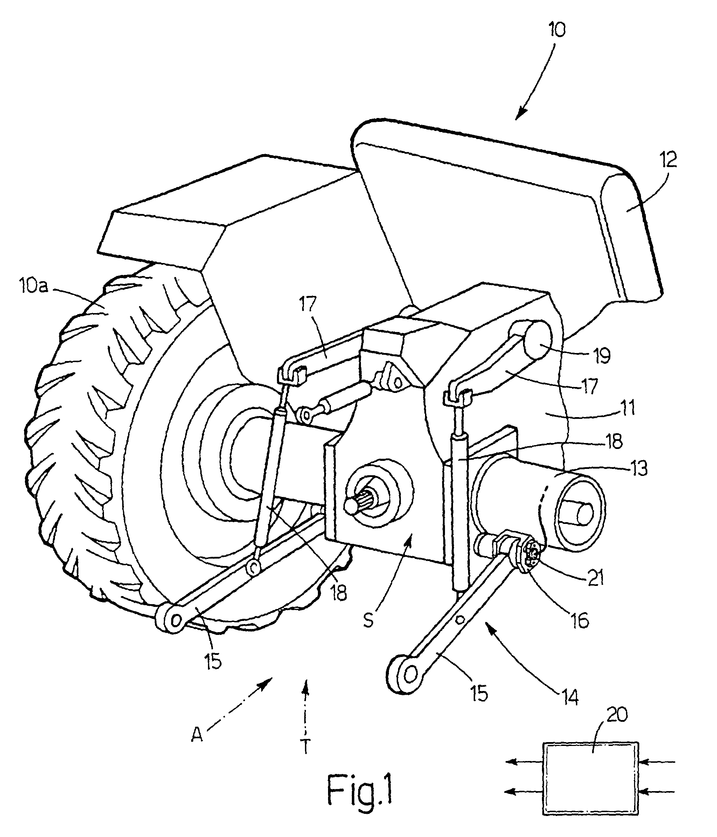

Number 10 in Figure 1 indicates the rear of an agricultural tractor comprising a frame 11 for supporting a seat 12 and a rear axle 13 provided in a conventional manner with two rear wheels 10a (only one shown in Figure 1).

A device 14 is mechanically connected to the frame 11 for controlling the attitude of an agricultural implement A (not shown in Figure 1), this device 14 being the main object of the present invention.

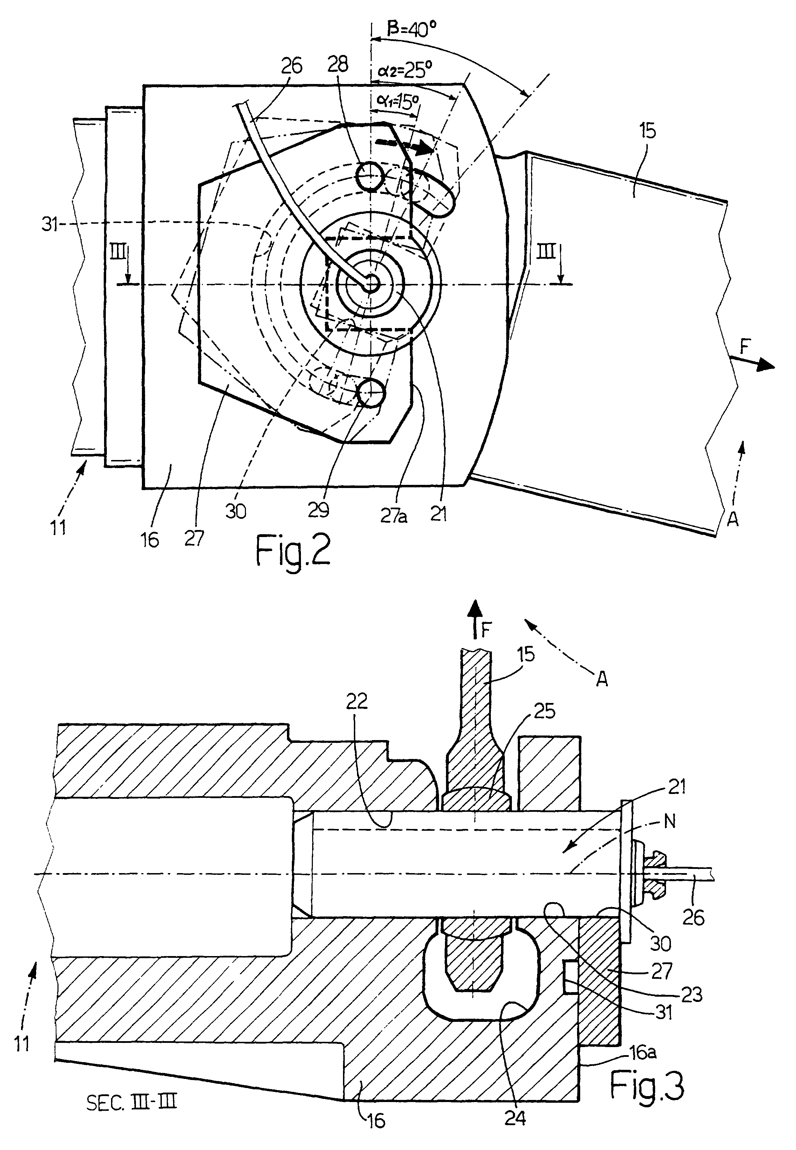

Device 14 comprises two lower arms 15, by which respective support members 16 (only one shown in Figure 1) projecting from frame 11 (see also Figures 2, 3) are connected mechanically to the agricultural implement A drawn by the agricultural tractor 10. Device 14 further comprises two top arms 17 corresponding with and connected to lower arms 15 by respective articulated rods 18. More specifically, as shown in Figure 1, each lower arm 15 is connected mechanically to the corresponding top arm 17 by a corresponding rod 18 pivoting with respect to arms 15, 17.

One end of each top arm 17 is integral with a shaft 19, which is rotated in a known manner (not shown) by a hydraulically operated device controlled by an electronic central control unit 20 for processing a number of signals a.o. from two deflection sensors 21 fitted to members 16 projecting from frame 11.

Lower arms 15, top arms 17, rods 18, and shaft 19 together form part of a lifting device S powered, for example, as already mentioned, by a hydraulic circuit (not shown) and for lifting and lowering with respect to ground T any implement A attached by known mechanical means to the lower arms 15. Lifting and lowering of implement A with respect to ground T may obviously be controlled by the electronic central control unit 20, which may activate the hydraulic system to rotate shaft 19 one way or the other.

Lifting device 14 additionally comprises a top link (visible in Figure 1 inbetween the top arms 17) for connection to a top portion of an implement A. This top link together with the lower arms 15 build a well known conventional three point hitch system.

As shown in Figure 3, each sensor 21 is inserted inside two coaxial bores 22, 23 provided in the element 16. Inbetween the bores 22, 23 a cavity 24 is provided for housing a spherical joint 25 interposed between sensor 21 and the corresponding lower arm 15.

When a pulling force F (Figure 3) is exerted by implement A on a lower arm 15, sensor 21 deflects by an amount obviously depending on the value of F. In other words, the greater the force F exerted by implement A via arm 15, the greater the deflection of corresponding sensor 21. The amount of deflection is convertible into an electric signal transmitted over a cable 26 to central control unit 20 which, as stated, controls the lifting device S.

Consequently, when an anomalous increase in force F occurs while the implement A works the ground T, central control unit 20 raises implement A in a known manner, and, once the cause of the anomalous increase of the force F is removed, lowers implement A back to its previous position.

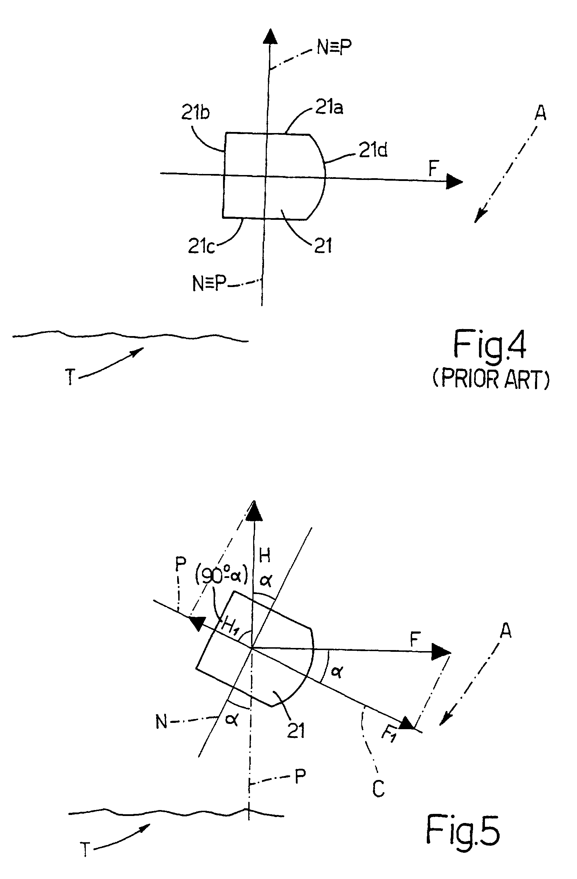

As shown in Figures 2, 4 and 5, the cross section of sensor 21 comprises three straight sides 21a, 21b and 21c perpendicular to one another, and a curved side 21d connecting straight sides 21a and 21c. The cross section of sensor 21 is shaped in this manner to enable sensor 21 to be positioned correctly with respect to a locating plate 27 (Figures 2, 3) which may be fixed by two bolts 28, 29 to member 16 integral with frame 11. More specifically, curved face 21d of sensor 21 must be positioned facing implement A, whereby, in the prior-art embodiment shown in Figure 4, the neutral axis N of sensor 21 is substantially perpendicular to the surface of ground T.

It should be pointed out that neutral axis N is none other than the line left in the drawing plane by the neutral plane n of the deflected beam defined by sensor 21 (see also Figure 3). If the neutral plane n is not positioned correctly, the F values detected by sensor 21 are unreliable and result in malfunctioning of the system as a whole.

To position sensor 21 correctly with respect to locating plate 27, a foolproof seat 30 simply needs to be formed in the face 27a of plate 27 facing implement A. Seat 30 has three flat perpendicular faces to house sides 21a, 21b and 21c of sensor 21, so that curved face 21d of sensor 21 is positioned correctly facing implement A.

Figure 4 shows a conventional position of sensor 21, in which neutral axis N is coincident with the axis P perpendicular to ground T, and, as stated, axis N is perpendicular to the force F exerted by implement A on one of the lower arms 15. H indicates the force produced by rod 18 to lift implement A out of the ground upon force F exceeding a predetermined threshold. As can be seen, in this case, force H is not detected by sensor 21 as the force H lies along neutral axis N and therefore is unable to exert either tensile or compressive stress on the fibres of sensor 21 on either side of neutral plane n.

On the other hand, if, as shown in Figure 5, sensor 21 is tilted a given angle α (which is predetermined by certain criteria as explained in detail later on), sensor 21 is able to detect not only component F1 of F along an axis C perpendicular to neutral axis N, but also component H1 of force H along the same axis C. F1 will obviously be equal in absolute value to F.cos α, and H1 equal in absolute value to H.sin α.

From a different point of view, angle α may be considered to be the angle formed by neutral axis N and axis P perpendicular to the ground T. Obviously, in the prior-art situation shown in Figure 4, angle α = 0°.

In the Figure 5 case, central control unit 20 is able to determine force F1 perpendicular to neutral axis N, and which is actually less than F. By means of appropriate processing by the central control unit 20, however, it is possible to correct this false reading to work out the real F value from the detected F1 value.

Only being able to read a force lying along axis C, sensor 21 is operable to determine the value R of the vector sum of F1 and H1. In other words, sensor 21 can also "see" the force H, in the form of H1, produced by arms 17 via rods 18, and can therefore read the instantaneous value of R = (F1-H1).

Consequently, when rod 18 lifts lower arm 15, and hence H is other than zero, not only is the resultant force R reduced on account of the increase in H1, but there is also a simultaneous reduction in force F1 since implement A is being raised by arms 15. Arms 15 stop lifting as soon as value R falls within a predetermined acceptance range. If force R increases again, central control unit 20 commands rods 18 to produce new forces H to lift implement A, and so on.

The lifting of implement A is thus broken up into several parts to prevent implement A from being withdrawn completely from ground T for no good purpose. In other words, in the presence of an exceptional force F1, and hence F, the lifting device S begins lifting lower arms 15 by just enough to restore the values of R to a predetermined acceptable range, so that in many cases implement A is allowed to continue working the ground T as opposed to being withdrawn completely by the lifting device S.

For the above reasons, by correctly co-ordinating forces H and F, the present invention therefore provides for preventing jerky operations caused by implement A being withdrawn completely from ground T, being plunged straight back into ground T upon central control unit 20 determining a zero force F, and then being withdrawn completely once more upon force F again exceeding the threshold value.

For example, when working fairly soft ground T beneath a very hard layer, as in the case of grassland, using sensor 21 tilted at a given angle α (Figure 5), central control unit 20 stops implement A from being lifted once R falls once more within an acceptable range. Using a conventionally positioned sensor 21 (Figure 4), on the other hand, once the hard layer is detected, implement A is withdrawn completely, thus giving rise to undesired jerking. As stated, positioning sensor 21 with respect to frame 11 according to the present invention prevents implement A from being withdrawn completely to no purpose, thus keeping the implement longer in the work position.

The tilt angle α depends on the desired sensitivity of the system. That is, the further sensor 21 is tilted, i.e. the greater angle α, the greater the value of H1 and hence system sensitivity with respect to H.

Tilt angle α is user selected on the basis of mean penetration of implement A, the type of ground, and desired system sensitivity. The system may therefore be sold, for example, together with tables made up by the constructor of the tractor indicating recommended tilt angles α for different ground consistencies and different types of implements. The system may also be in-field calibrated by the user on a trial and error basis using values in the region of the α angles recommended by the constructor.

If implement A is a ripper, for example, ground penetration is deep, so that the lift action is preferably broken up considerably. A tilt angle α ranging between 20° and 25° is therefore preferably selected to obtain substantial H1 components and increased lift action break-up.

Conversely, in the case of soft ground and an implement A in the form of a disk harrow or cultivator, tilt angles α close to zero and nearing the Figure 4 (prior-art) position may be used. In this case, in fact, a high degree of break-up is not required.

Tests have shown that angles α ranging between 0° and 40° cover a wide range of agricultural implements A and different types of ground.

Sensor 21 can be tilted using the system shown in Figure 2. A substantially C-shaped groove 31 is formed in the outer face 16a (figure 3) of member 16, so that, by means of bolts 28 and 29, plate 27 can be fitted in a position other than that shown by the full line in Figure 2.

For example, plate 27 can be fitted in a first position defined by a tilt angle α1 of 15°, or in a second position defined by a tilt angle α2 of 25°; α1 and α2 both being within an angle β of 40° for the reason explained above. In the Figure 2 embodiment, groove 31 is therefore in the form of a 130° sector (90°+40°). A scale with 1° divisions may be provided on the member 16 with a pointer on the plate 27 to facilitate the correct choice of the angle α.

To adjust the system to the conditions of a new implement A or different type of ground T, or both, the user simply unscrews bolts 28, 29 from groove 31, rotates plate 27, e.g. clockwise, to set the approximate tilt angle α recommended, for example, in a table supplied by the constructor of the tractor 10, and then fixes plate 27 back on to member 16. The user then may proceed by trial and error to determine the best tilt angle α for the implement A and ground T involved.

To anyone skilled in the art, the above system described with particular reference to Figure 2 may obviously be replaced with a similar mechanical system for rotating plate 27 by the desired angle α without, however, departing from the scope of the present invention.

For example, in a further embodiment not shown, plate 27 is rotated by a lever connected thereto. Plate 27 may also be rotated by remote-control systems, in particular, operated by the user from seat 12. More particularly, such a remote-control system may comprise an electric step motor acting on the plate 27 which is controlled for back-and-forth movement by a switch in the cab of the tractor 10 with a readout of the chosen angle α.

## Claims

1. A device (14) for controlling the attitude of an agricultural implement (A) drawn by an agricultural vehicle (10), said device (14) comprising :
- a lifting device (S) having two lower arms (15);
- two deflection sensors (21) located at the attachment points of the lower arms (15) to the frame (11) of said agricultural vehicle(10); and
- an electronic central control unit (20) for processing data received from said sensors (21) and controlling lifting and lowering of said implement (A) by said lifting device (S) as a function of the data detected by said two sensors (21); and
**characterized in that** each of said sensors (21) comprises locking means (27, 28, 29) enabling selective tilt angle adjustment of the position of each of said sensors (21) with respect to said frame (11) so that each of said sensors (21) assumes a predetermined tilt with respect to the ground (T); said tilt being determined as a function of the implement (A) and the type of ground (T) to be worked and said tilt angle adjustment ranging from 0° to 40°.

2. A device (14) according to claim 1, **characterized in that** each of said sensors (21) comprises a respective neutral axis (N).

3. A device (14) according to claim 2, **characterized in that** said neutral axis (N) can be tilted and fixed by means of said locking means (27, 28, 29) at an angle α) with respect to an axis (P) substantially perpendicular to the ground (T).

4. A device (14) according to any of the preceding claims, **characterized in that** said locking means (27, 28, 29) is fixed to a groove (31).

5. A device (14) according to claim 4, **characterized in that** said groove (31) is C-shaped and subtends an angle of approximately 130°.

6) A device (14) according to any of the preceding claims, **characterized in that** said locking means (27, 28, 29) comprise a foolproof seat (30) for housing an associated sensor (21) with a unique orientation.

7. A device (14) according to any of the preceding claims, **characterized in that** said locking means (27, 28, 29) are remote-controlled.

8. A device (14) according to any of the preceding claims, **characterized in that** each of said sensors (21), by virtue of being tilted with respect to the ground (T), is sensitive to a component (H1) of the lifting force (H) of said lifting device (S).

9. A device (14) according to claim 8 when appended to claim 2, **characterized in that** each of said sensors (21) forms a vector sum (R) of said component (H1) of said lifting force (H) along an axis (C) perpendicular to said neutral axis (N), and the component (F1), also along the same axis (C), of the pulling force (F) of said implement (A).

10. A device (14) according to claim 9, **characterized in that** said electronic central control unit (20), depending on the value detected instant by instant of said vector sum (R), determines whether or not to activate said lifting device (S) to lift or lower said agricultural implement (A) with respect to the ground (T).

11. A method of controlling the attitude of an agricultural implement (A) drawn by an agricultural vehicle (10), said vehicle (10) comprising a device (14) according to claim 1; and
**characterized in that** the method comprises the steps of :
- determining a vector sum (R) of a component (H1) of a lifting force (H) of a lifting device (S) and a component (F1) of the pulling force (F) of said implement (A); said components (H1, F1) being considered along an axis (C) perpendicular to the neutral axis (N) of a deflection sensor (21);
- lifting said agricultural implement (A) upon said vector sum (R) exceeding a predetermined threshold value;
- arresting the lifting of said agricultural implement (A) upon said vector sum (R) falling within a predetermined acceptance range; and
- lowering the agricultural implement (A).

12. A method according to claim 11, **characterized in that** all the operations are controlled by an electronic central control unit (20).

## Patentansprüche

1. Vorrichtung (14) zur Steuerung der Lage eines landwirtschaftlichen Arbeitsgerätes A, das von einem landwirtschaftlichen Fahrzeug (10) gezogen wird, wobei die Vorrichtung (14) Folgendes umfasst:
- eine Hubvorrichtung (S) mit zwei unteren Armen (15);
- zwei Auslenkungs-Sensoren (21), die an den Anbringungspunkten der unteren Arme (15) an dem Fahrgestell (11) des landwirtschaftlichen Fahrzeuges (10) angeordnet sind; und
- eine elektronische zentrale Steuereinheit (20) zur Verarbeitung von von den Sensoren (21) empfangenen Daten und zur Steuerung des Anhebens und Absenkens des Arbeitsgerätes A durch die Hubvorrichtung (S) als eine Funktion der von den zwei Sensoren (21) erfassten Daten; und
**gekennzeichnet dadurch, dass** jeder der Sensoren (21) Verriegelungseinrichtungen (27, 28, 29) umfasst, die eine selektive Neigungswinkel-Einstellung der Position jedes der Sensoren (21) gegenüber dem Fahrgestell (11) ermöglichen, so dass jeder der Sensoren (21) eine vorgegebene Neigung gegenüber dem Boden (T) einnimmt, wobei die Neigung als eine Funktion des Arbeitsgerätes (A) und der Art des zu bearbeitenden Bodens (T) bestimmt wird und die Neigungswinkel-Einstellung von 0° bis 40° reicht.

2. Vorrichtung (14) nach Anspruch 1, **dadurch gekennzeichnet, dass** jeder der Sensoren (21) eine jeweilige neutrale Achse (N) umfasst.

3. Vorrichtung (14) nach Anspruch 2, **dadurch gekennzeichnet, dass** die neutrale Achse (N) mit Hilfe der Verriegelungseinrichtungen (27, 28, 29) auf einen Winkel (α) gegenüber einer Achse (P) im Wesentlichen senkrecht zum Boden (T) geneigt und festgelegt werden kann.

4. Vorrichtung (14) nach einem der vorhergehenden Ansprüche, **dadurch gekennzeichnet, dass** die Verriegelungseinrichtungen (27, 28, 29) an einer Nut (31) befestigt sind.

5. Vorrichtung (14) nach Anspruch 4, **dadurch gekennzeichnet, dass** die Nut (31) C-förmig ist und sich über einen Winkel von ungefähr 130° erstreckt.

6. Vorrichtung (14) nach einem der vorhergehenden Ansprüche, **dadurch gekennzeichnet, dass** die Verriegelungseinrichtungen (27, 28, 29) einen narrensicheren Sitz (30) zur Unterbringung eines zugehörigen Sensors (21) mit einer eindeutigen Ausrichtung umfassen.

7. Vorrichtung nach einem der vorhergehenden Ansprüche, **dadurch gekennzeichnet, dass** die Verriegelungseinrichtungen (27, 28, 29) femgesteuert sind.

8. Vorrichtung (14) nach einem der vorhergehenden Ansprüche, **dadurch gekennzeichnet, dass** jeder der Sensoren (21) aufgrund seiner Neigung gegenüber dem Boden (T) auf eine Komponente (H1) der Hubkraft (H) der Hubvorrichtung (S) anspricht.

9. Vorrichtung nach Anspruch 8 unter Rückbeziehung auf Anspruch 2, **dadurch gekennzeichnet, dass** jeder der Sensoren (21) eine Vektorsumme (R) der Komponente (H1) der Hubkraft (H) entlang einer Achse (C) senkrecht zu der neutralen Achse (N) und der Komponente (F1) ebenfalls entlang der gleichen Achse (C) der Zugkraft (F) des Arbeitsgerätes (A) bildet.

10. Vorrichtung (14) nach Anspruch 9, **dadurch gekennzeichnet, dass** die elektronische zentrale Steuereinheit (20) in Abhängigkeit von dem zu jeder Zeit festgestellten Wert der Vektorsumme (R) feststellt, ob die Hubvorrichtung (S) zum Anheben oder Absenken des landwirtschaftlichen Arbeitsgerätes (A) gegenüber dem Boden (T) aktiviert werden soll.

11. Verfahren zur Steuerung der Lage eines landwirtschaftlichen Arbeitsgerätes (A), das von einem landwirtschaftlichen Fahrzeug (10) gezogen wird, wobei das Fahrzeug (10) eine Vorrichtung (14) gemäß Anspruch 1 aufweist, **dadurch gekennzeichnet, dass** das Verfahren die folgenden Schritte umfasst:
- Feststellen einer Vektorsumme (R) einer Komponente (H1) einer Hubkraft (H) einer Hubvorrichtung (S) und einer Komponente (F1) der Zugkraft (F) des Arbeitsgerätes (A), wobei die Komponenten (H1, F1) entlang einer Achse (C) senkrecht zu der neutralen Achse (N) eines Auslenkungssensors (21) betrachtet werden;
- Anheben des landwirtschaftlichen Arbeitsgerätes (A), wenn die Vektorsumme (R) einen vorgegebenen Schwellenwert übersteigtK
- Stoppen des Anhebens des landwirtschaftlichen Arbeitsgerätes (A), wenn die Vektorsumme (R) in einen vorgegebenen annehmbaren Bereich fällt; und
- Absenken des landwirtschaftlichen Arbeitsgerätes (A).

12. Verfahren nach Anspruch 11, **dadurch gekennzeichnet, dass** alle die Operationen durch eine elektronische zentrale Steuereinheit (20) gesteuert werden.

## Revendications

1. Dispositif (14) de contrôle d'attitude d'un outil agricole (A) tracté par un véhicule agricole (10), ledit dispositif (14) comprenant :
- un dispositif de relevage (S) pourvu de deux bras inférieurs (15);
- deux capteurs de déflexion (21) situés aux points de fixation des bras inférieurs (15) au châssis (11) dudit véhicule agricole(10); et
- une unité électronique centrale de contrôle (20) pour traiter les données reçues desdits capteurs (21) et contrôlant le soulèvement et l'abaissement dudit outil (A) par ledit dispositif de relevage (S) en tant que fonction des données détectées par lesdits deux capteurs (21); et
**caractérisé en ce que** chacun desdits capteurs (21) comprend des moyens de verrouillage (27, 28, 29) permettant d'ajuster sélectivement l'angle de basculement de la position de chacun desdits capteurs (21) par rapport audit châssis (11), de sorte que chacun desdits capteurs (21) adopte un basculement prédéterminé par rapport au sol (T); ledit basculement étant déterminé en fonction de l'outil (A) et du type de sol (T) à travailler et ledit ajustement de l'angle de basculement se situant entre 0° et 40°.

2. Dispositif (14) selon la revendication 1, **caractérisé en ce que** chacun desdits capteurs (21) comprend un axe neutre respectif (N).

3. Dispositif (14) selon la revendication 2, **caractérisé en ce que** ledit axe neutre (N) peut être basculé et fixé avec lesdits moyens de verrouillage (27, 28, 29) suivant un angle (α) par rapport à un axe (P) substantiellement perpendiculaire au sol (T).

4. Dispositif (14) selon l'une quelconque des revendications précédentes, **caractérisé en ce que** lesdits moyens de verrouillage (27, 28, 29) sont fixés à une rainure (31).

5. Dispositif (14) selon la revendication 4, **caractérisé en ce que** ladite rainure (31) a la forme d'un C et sous-tend un angle d'environ 130°.

6. Dispositif (14) selon l'une quelconque des revendications précédentes, **caractérisé en ce que** lesdits moyens de verrouillage (27, 28, 29) comportent un siège indéréglable (30) pour accueillir un capteur associé (21) avec une orientation unique.

7. Dispositif (14) selon l'une quelconque des revendications précédentes, **caractérisé en ce que** lesdits moyens de verrouillage (27, 28, 29) sont télécommandés.

8. Dispositif (14) selon l'une quelconque des revendications précédentes, **caractérisé en ce que** chacun desdits capteurs (21), étant basculé par rapport au sol (T), est sensible à une composante (H1) de la force de relevage (H) dudit dispositif de relevage (S).

9. Dispositif (14) selon la revendication 8, lorsqu'elle se rapporte à la revendication 2, est **caractérisé en ce que** chacun desdits capteurs (21) constitue une somme vectorielle (R) de ladite composante (H1) de ladite force de relevage (H) le long d'un axe (C) perpendiculaire audit axe neutre (N), et de la composante (F1), également le long du même axe (C), de la force de traction (F) dudit outil (A).

10. Dispositif (14) selon la revendication 9, **caractérisé en ce que** ladite unité électronique centrale de contrôle (20), en fonction de la valeur détectée instant par instant de ladite somme vectorielle (R), détermine s'il convient ou non d'activer ledit dispositif de relevage (S) pour soulever ou abaisser ledit outil agricole (A) par rapport au sol (T).

11. Méthode de contrôle de l'attitude d'un outil agricole (A) tracté par un véhicule agricole (10), ledit véhicule (10) comprenant un dispositif (14) selon la revendication 1; et
**caractérisée en ce que** la méthode comprend les étapes suivantes :
- de détermination d'une somme vectorielle (R) d'une composante (H1) d'une force de relevage (H) d'un dispositif de relevage (S) et d'une composante (F1) de la force de traction (F) dudit outil (A); lesdites composantes (H1, F1) étant considérées le long d'un axe (C) perpendiculaire à l'axe neutre (N) d'un capteur de déflexion (21);
- de soulèvement dudit outil agricole (A) lorsque ladite somme vectorielle (R) excède une valeur-seuil prédéterminée;
- d'arrêt du soulèvement dudit outil agricole (A) lorsque ladite somme vectorielle (R) arrive dans une plage d'acceptation prédéterminée; et
- d'abaissement de l'outil agricole (A).

12. Méthode selon la revendication 11, **caractérisée en ce que** toutes les opérations sont contrôlées par une unité électronique centrale de contrôle (20).
